(19) Europäisches Patentamt
European Patent Office
Office européen des brevets

(11) Publication number: **0 471 470 B1**

(12) **EUROPEAN PATENT SPECIFICATION**

(45) Date of publication of patent specification: **21.12.94**  (51) Int. Cl.5: **A23L 1/318**, **A23B 4/28**

(21) Application number: **91306946.4**

(22) Date of filing: **29.07.91**

(54) **Method of tenderising meat before slaughtering.**

(30) Priority: **30.07.90 GB 9016698**

(43) Date of publication of application:
**19.02.92 Bulletin 92/08**

(45) Publication of the grant of the patent:
**21.12.94 Bulletin 94/51**

(84) Designated Contracting States:
**AT BE CH DE DK ES FR GR IT LI LU NL SE**

(56) References cited:
WO-A-88/06003          GB-A- 1 161 722
GB-A- 1 448 498          IE-A- 44 891
US-A- 2 786 768          US-A- 3 818 106

WORLD PATENTS INDEX Derwent Publications Ltd.,London, GB; AN 76-44130X &DD-A-118 969 (H. RUTTLOFF)

WORLD PATENTS INDEX Derwent Publications Ltd.,London, GB; AN 67-01812H &CA-A-778 334 (SWIFT CANADIAN CO.)

(73) Proprietor: **BRITISH BEEF COMPANY LIMITED**
**13-16 West Smithfield**
**London EC1A 9JN (GB)**

(72) Inventor: **Warren, Simon James**
**6 Jeyes Close**
**Moulton, Northampton NN3 1GH (GB)**

(74) Representative: **Cooke, William Douglas et al**
**Hughes Clark & Co.**
**P.O. Box 22**
**114/118 Southampton Row**
**London WC1B 5AA (GB)**

**Description**

The present invention relates to a method of pre-tenderising meat.

It has been known for many years that if an animal is injected with a proteolytic enzyme before the animal is slaughtered, the tenderness of the meat obtained from the animal is enhanced. It should be noted that in processes of this type much if not most of the enzyme action which is responsible for the tenderisation occurs during cooking. Acordingly such processes are referred to herein as "pre-tenderising" processes. A number of suitable enzymes are known, including bromelain, ficin and papain.

In the past, as disclosed in GB1161722 internal haemorrhaging and other undesirable physiological side effects sometimes occurred before the animal was slaughtered. It was originally thought that these side effects were due to impurities to the enzymes used, and accordingly GB 1161722 discloses a method for preparing a purified bromelain solution comprising adjusting the pH of the solution to at least 7.5 and maintaining the solution at this pH for at least six hours. Subsequently, the enzyme present in the solution is reversably de-activated.

It is explained GB1448498 and its equivalent IR38718 that proteolytic enzymes, which commonly comprise an active enzyme component and a reversibly inactive enzyme component (which is gradually-activated when injected into the animal's body) can cause an adverse reaction in an animal which is due solely to the active enzyme per se.

Accordingly GB1448498 (and IR38718) disclose certain disulphide compounds which are capable of reversibly deactivating proteolytic enzymes. A proteolytic enzyme deactivated in this manner contains little or no activated enzyme and when injected into an animal's body, is slowly reactivated over a period of time by reducing compounds such as thiols present in the animal's body.

IR44891 discloses a method of reversibly deactivating a proteolytic enzyme, namely papain or ficin which does not require the use of a disulphide or other compound which would require Government regulatory approval. In the process described in IR44891, the papain or ficin is reversibly deactivated by subjecting it to a pH of 11 to 12.5. The resulting reversibly deactivated proteolytic enzyme can be safely injected into a living animal and is gradually re-activated in the animal's vascular system by the action of heat and reducing compounds such as thiols which occur naturally in the animal's body.

Thus it will be apparent that many of the problems associated with ante-mortem meat pre-tenderisation have been substantially overcome, and antemortem meat tenderisation has received regulatory approval in the United Kingdom.

In practice, a beast is led into a weighing crate and weighed in order to determine the required dose of proteolytic enzyme. The weighing crate doubles as a restraining pen. A halter is put round the animal to turn its head to one side to expose the jugular vein, into which the calculated dose of proteolytic enzyme is injected. The animal is subsequently slaughtered.

However the above process requires a skilled operator, is somewhat cumbersome and time consuming and does not lend itself to automation. Furthermore there is continuing concern among animal rights pressure groups and others that such a process might cause unnecessary suffering to the animal. A further inefficiency arises from the delay between injection and slaughtering. An object of the present invention is to alleviate at least some of the above disadvantages.

Accordingly, the present invention provides a method of pre-tenderising meat wherein a proteolytic enzyme is introduced into the vascular system of an animal and the animal is stuck and bled after sufficient time has elapsed for the proteolytic enzyme to be distributed through the animal's vascular system by the action of the heart, characterised in that the animal is stunned, and the proteolytic enzyme is then introduced into the vascular system of the substantially brain-dead animal whilst the animal's heart is still beating.

Accordingly the enzyme can be introduced whilst the animal is in a prone position and no weighing crate or other restraining means is required. Furthermore the jugular vein can be found and the enzyme injected much more easily when the animal is prone and lifeless, and accordingly, much less operator skill is required.

Preferably the animal exhibits substantially no involuntary limb movement immediately prior to introducing the proteolytic enzyme. If such involuntary movement is detected, it can be stopped by pithing the animal. In the case of cattle for example the animal is normally shot in the head with a captive bolt and is then pithed by mechanically disrupting the remains of the animal's brain with a suitable implement. However it is considered that the animal is substantially brain dead immediately after stunning and is incapable of feeling pain at this stage.

Although it is considered that the main application of the invention is to bovine animals it is envisaged that the invention is also applicable to other edible animals which are commonly slaughtered for human

2

consumption such as pigs for example.

Normally, stunning does not stop the animal's heart from beating (although it may be advisable to check this in individual instances) and the heart is capable of beating for a considerable time after brain death. Preferably the animal is bled within five minutes of introducing the proteolytic enzyme.

Preferably the animal is weighed at a first station (for example by being guided over a weighing platform) and is subsequently stunned at a second station (in a stunning box for example) which is different from the first station, the amount of the proteolytic enzyme being determined in accordance with the weight of the animal.

Although it is not essential that the proteolytic enzyme is reversibly deactivated, this is preferable since there is a danger that active enzyme might cause the animal's heart to stop beating and impair the distribution of the proteolytic enzyme in the animal's blood stream. The proteolytic enzyme may be papain, bromelain or ficin for example.

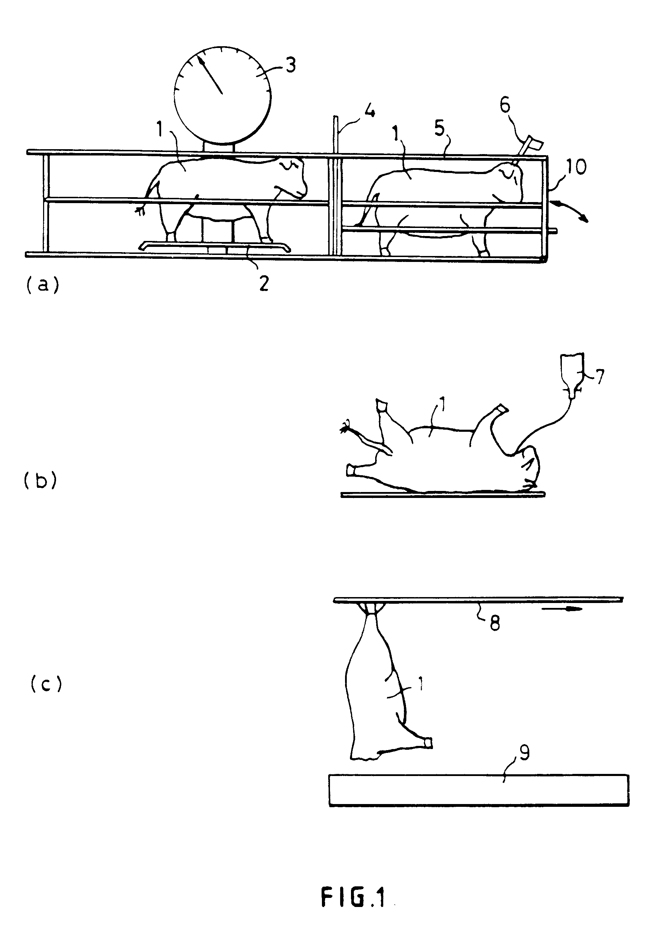

A method of pre-tenderising meat in accordance with the invention will now be described by way of example only with reference to the accompanying drawing, Figure 1, which is a diagrammatic elevation showing the main stages in slaughtering and injecting cattle.

As shown in Figure 1(a) the animal is first led onto a weighing platform 2 and the required dosage of 4% acqueous papain solution is calculated from the weight indicated by the scale 3 of the weighing platform and also on the basis of the sex and age of the animal. A guillotine door 4 is opened and the animal is moved forward into a stunning box 5. The door 4 is then closed and the animal is shot in the head using a captive bolt pistol 6. At this stage the animal is optionally pithed and is released from the stunning box by opening a hinged door 10 which is rotated about its axis as shown by the curved arrow in Figure 1-(a).

The lifeless animal then falls onto a horizontal floor surface as shown in Figure 1(b) and the enzyme solution is infused into the jugular vein under gravity with a burette 7 containing the required dosage of 4% acquous papain solution.

After infusion the body is shackled by the rear legs and hoisted upright. After two minutes the beast is stuck and bled and dressed in a conventional manner and is conveyed over a bleeding trough 9 on an overhead conveyor 8 as shown in Figure 1(c).

**EXAMPLE 1**

The above process was applied to a number of cattle in order to test its efficacy.
The test results were as follows:

## TABLE 1

| Example | Sex | No.of Mature teeth | Live Wt. kg(lbs) | Enzyme Dosage (ml) |
|---|---|---|---|---|
| a) | Heifer | 2 Mature | 451(994) | 214 |
| b) | Heifer | 2 Mature | 459(1011) | 217 |
| c)* (not injected) | Heifer | N/A | 463(1021) | – |
| d)* | Heifer | 2 Mature | 445(982) | 211 |
| e) | Heifer | 2 Mature | 481(1061) | 228 |
| f) * | Heifer | 2 Mature | 508(1120) | 241 |
| g) | Heifer | Calf only | 482(1062) | 202 |
| h) * | Heifer | Calf only | 513(1130) | 215 |

* – Comparative

| Example | Test Details |
|---|---|
| a) | The beast was shot, released from the stunning pen and pithed within thirty seconds. Before pithing, the beast was kicking severely with involuntary movement. This ceased upon pithing. After a further forty seconds infusion had been completed. At three minutes total time from shotting, bleeding commenced. |
| b) | The beast was shot and dropped from the box in thirty seconds. After a further thirty seconds, infusion was complete. The animal was then shackled and hoisted. After three minutes total time bleeding commenced. Pithing was not carried out. |
| c) (Comparative - not injected) | This beast was shot and dressed and used as the conntrol. |
| d) (Comparative) | The beast was shot, released from the pen and pithed by thirty seconds. Great difficulty was found in finding the vein, and infusion did not start until five minutes total time had elapsed. The beast was completely inert during this time. The infusion was slower than normal and took thirty four seconds. After a further two minutes bleeding commenced. Total time taken was seven minutes thirty four seconds. Initial reaction was that the heart had stopped upon shooting as no beat could be felt. |
| e) | The beast was shot, released from the pen and pithed in thirty seconds. At one minute, infusion was complete. At three minutes bleeding commenced. |

f) (Comparative – failed to find vein)  The beast was shot but not pithed. After three minutes, unable to find vein so animal was shackled, hoisted and bled.

g)  The beast was shot, reshot and released from the stunning pen. Enzyme was infused into the animal After time elapse of one minute 30 seconds, infusion had finished. After three minutes total time from shooting, bleeding commenced. Beast not pithed.

h) (Comparative – injected before stunning)  This was restrained in the stunning pen and infused with the enzyme solution before stunning, the beast was shot and dressed. This gave the standard control.

All the carcases were dressed in the standard way, weighed and classified after bleeding, then placed in a chiller set at +1°C until ready for evaluation, after forty eight hours.

To evaluate the presence of enzyme in the muscle tissues, several muscles were taken and subjected to three types of test. The muscles taken were: leg, striploin, shin, silverside and the two fillets either side of the shoulder blade. The test were (a) heating in a water bath set at 60°C for three hours, (b) dry roasting in an oven at 175°C until an internal temperature of 70°C was achieved, and finally (c) steaks were grilled on medium heat, for seven minutes per side.

The water bath results were as follows:

TABLE 2

| Cut | a) | b) | c)* | d)* | e) | f)* | g) | h)* |
|---|---|---|---|---|---|---|---|---|
| Silverside | 5 | 5 | 1 | 2 | 4 | 2 | N/A | 4 |
| Striploin | 5 | 5 | $1\frac{1}{2}$ | 4 | 5 | 2 | N/A | 4 |
| Blade Fillet (1) | $4\frac{1}{2}$ | 5 | 1 | 3 | 4 | 1 | N/A | 5 |
| Blade Fillet (2) | $4\frac{1}{2}$ | 5 | 1 | 3 | 5 | 1 | N/A | 4 |
| Leg | 5 | 5 | $1\frac{1}{2}$ | 3 | 4 | 1 | N/A | $4\frac{1}{2}$ |
| Shin | 5 | 5 | 1 | 3 | 4 | 1 | N/A | 4 |

* - Comparative

The above tabulated values range from 1 (no breakdown) to 5 (mushy) on a subjective scale.

The following day, two of the cuts, i.e. the Blade Fillet and the Silversides were cut into small roasting joints and placed in a Rapidaire convection oven set at 175°C, until an internal temperature of 70°C was achieved. The results were as follows:-

## TABLE 3

| Silverside | | Blade Fillet | |
|---|---|---|---|
| Example | Cold Weight (kg) | Example | Cold Weight (kg) |
| a) | 1.33 | a) | 0.69 |
| b) | 1.50 | b) | 0.66 |
| c)* | 1.23 | c)* | 0.37 |
| d)* | 1.39 | d) | 0.40 |
| e) | 1.36 | e) | 0.63 |
| f)* | 1.48 | f)* | 0.65 |
| g) | 1.39 | h)* | 0.61 |
| h)* | 1.37 | | |

          * - Comparative                                * - Comparative

The evaluation of the cooked meat was made on the subjective scale of 1 - Tough to 10 = V. Tender by four experienced tasters.

TABLE 4

| Blade Fillet Joints | | | | | |
|---|---|---|---|---|---|
| | A.K. | B.S. | S.W. | I.R. | Average |
| a) | 7 | 6 | 6 | 4 | 5.75 |
| b) | 9 | 9 | 9 | 9 | 9 |
| c)* | 3 | 2 | 2 | 2 | 2.25 |
| d)* | 7 | 5 | 6 | 7 | 6.25 |
| e) | 7 | 6 | 6 | 6 | 6.25 |
| f)* | 2 | 1 | 2 | N/A | 1.7 |
| h)* | 7 | 8 | 6 | 8 | 7.25 |

* - Comparative

| Silversides | | | | | |
|---|---|---|---|---|---|
| | A.K. | B.S. | S.W. | I.R. | Average |
| a) | 6 | 8 | 6 | 7 | 6.75 |
| b) | 8 | 9 | 9 | 9 | 8.75 |
| c)* | 5 | 3 | 3 | 8 | 4.75 |
| d)* | 6 | 5 | 4 | 5 | 5 |
| e) | 6 | 4 (variable) | 6 | 5 | 5.25 |
| f)* | 3 | 2 | 2 | 5 | 3 |
| g) | 8 | 8 | 8 | 8 | 8 |
| h)* | 7 | 8 | 7 | 7 | 7.25 |

* - Comparative

The final evaluation was to griddle Blade Fillet Steaks on medium heat for seven minutes per side, turning once. Again the grading was 1 = Tough, 10 = V. Tender, on a subjective scale.

TABLE 5

|      | A.K. | B.S. | S.W. | I.R. | Average |
|------|------|------|------|------|---------|
| a)   | 4    | 3    | 4    | 4    | 4       |
| b)   | 8    | 8    | 8    | 8    | 8       |
| c)*  | 4    | 2    | 2    | 3    | 2.75    |
| d)*  | 6    | 6    | 3    | 6    | 5.25    |
| e)   | 6    | 3    | 6    | 2    | 4.25    |
| f)*  | 3    | 3    | 1    | 1    | 2       |
| h)*  | 6    | 5    | 6    | 6    | 5.75    |

\* - Comparative

It will be seen from Tables 2, 4 and 5 that with the exception of Example f) (in which the vein could not be found) the tenderness of the meat was better than the tenderness obtained in control example c) (in which no enzyme was injected). Furthermore it will be apparent that the tenderness was comparable to the tenderness obtained in comparative example h) (in which the enzyme was injected before stunning).

Furthermore the average time between stunning and sticking the animal in the examples of the invention was of the order of $2\frac{1}{2}$ to 3 minutes, which is appreciably shorter than the period of approximately six minutes between infusing and sticking which is required in the prior art process.

It is envisaged that the problem in finding the vein as experienced in example f) should not occur once experience has been gained in using the new technique. The problem experienced in example d) in which the animal's heart stopped beating could be detected by checking on the heart action, for example by using a stethoscope or by inserting a hollow needle into a vein and observing whether blood is periodically expelled from the needle.

It is envisaged that similar results will be obtained if other proteolytic enzymes such as bromelain or ficin for example were used. Accordingly it will be seen that the invention provides a humane and practical method of pre-tenderising meat which is well suited for an automated slaughtering process.

**Claims**

1. A method of pre-tenderising meat wherein a proteolytic enzyme is introduced into the vascular system of animal (1) and the animal is stuck and bled after sufficient time has elapsed for the proteolytic enzyme to be distributed through the animal's vascular system by the action of the heart, characterised in that the animal is stunned, and the proteolytic enzyme is then introduced into the vascular system of the substantially brain-dead animal (1) whilst the animal's heart is still beating.

2. A method as claimed in Claim 1, wherein the animal (1) exhibits substantially no involuntary limb movement immediately prior to introducing the proteolytic enzyme.

3. A method as claimed in Claim 1 or Claim 2 wherein the animal (1) is bled within 5 minutes of introducing the proteolytic enzyme.

4. A method as claimed in any preceding Claim wherein the animal (1) is stunned with a captive bolt.

5. A method as claimed in any preceding Claim wherein the animal (1) is pithed after being stunned but before the proteolytic enzyme is introduced.

6. A method as claimed in any preceding Claim wherein the animal (1) is weighed at a first station (2), and subsequently stunned at a second station, the amount of proteolytic enzyme being determined in accordance with the weight of the animal.

7. A method as claimed in Claim 6 wherein the animal (1) is weighed by being guided over a weighing platform (2) at said first station.

8. A method as claimed in any preceding Claim wherein the animal (1) is stunned in a stunning box (5), then a proteolytic enzyme is introduced, and then the animal is stuck and conveyed along a bleeding trough (9) by overhead conveyor means (8).

9. A method as claimed in any preceding claim wherein the proteolytic enzyme is a reversably deactivated enzyme.

10. A method as claimed in any preceding claim wherein the proteolytic enzyme is papain, bromelain or ficin.

11. A method as claimed in any preceding claim wherein the animal (1) is a bovine animal.

**Patentansprüche**

1. Verfahren zum Voraus-Zartmachen von Fleisch, wobei ein proteolytisches Enzym in das Gefässystem eines Tieres (1) eingeführt wird und das Tier getötet und ausgeblutet wird, nachdem eine genügende Zeitspanne vergangen ist, um das proteolytische Enzym durch die Herztätigkeit im Gefässystem des Tieres zu verteilen, dadurch gekennzeichnet, dass das Tier betäubt wird und das proteolytische Enzym dann in das Gefässystem des im wesentlichen hirntoten Tieres (1) eingeführt wird, während das Herz des Tieres noch schlägt.

2. Verfahren nach Anspruch 1, in welchem das Tier (1) unmittelbar vor dem Einführen des proteolytischen Enzyms im wesentlichen keine unwillkürlichen Gliederbewegungen ausführt.

3. Verfahren nach Anspruch 1 oder 2, in welchem das Tier (1) innerhalb von 5 Minuten nach dem Einführen des proteolytischen Enzyms ausgeblutet wird.

4. Verfahren nach einem der vorangehenden Ansprüche, in welchem das Tier (1) mit einem Bolzengerät betäubt wird.

5. Verfahren nach einem der vorangehenden Ansprüche, in welchem das Tier (1) nach dem Betäuben, aber vor dem Einführen des proteolytischen Enzyms, einen Genickstich erhält.

6. Verfahren nach einem der vorangehenden Ansprüche, in welchem das Tier (1) in einer ersten Station (2) gewogen wird und danach in einer zweiten Station betäubt wird, wobei die Menge des proteolytischen Enzyms in Abhängigkeit vom Gewicht des Tieres festgelegt wird.

7. Verfahren nach Anspruch 6, in welchem das Tier (1) gewogen wird, indem es in der ersten Station über eine Waageplattform (2) geführt wird.

8. Verfahren nach einem der vorangehenden Ansprüche, in welchem das Tier (1) in einer Betäubungsboxe (5) betäubt wird, dann ein proteolytisches Enzym eingeführt wird und danach das Tier getötet und mittels einer Hängebahn-Transporteinrichtung (8) längs eines Ausblutetroges (9) transportiert wird.

9. Verfahren nach einem der vorangehenden Ansprüche, in welchem das proteolytische Enzym ein reversibel inaktiviertes Enzym ist.

10. Verfahren nach einem der vorangehenden Ansprüche, in welchem das proteolytische Enzym Papain, Bromelin oder Ficin ist.

11. Verfahren nach einem der vorangehenden Ansprüche, in welchem das Tier (1) ein Tier aus der Unterfamilie der Rinder ist.

**Revendications**

1. Procédé d'attendrissement préalable de la viande, dans lequel une enzyme protéolytique est introduite dans le système vasculaire d'un animal (1) et l'animal est assommé et saigné après écoulement d'un temps suffisant pour que l'enzyme protéolytique soit distribuée dans le système vasculaire de l'animal sous l'action du coeur, caractérisé en ce que l'animal est assommé et l'enzyme protéolytique est introduite dans le système vasculaire de l'animal (1) sensiblement en mort cérébrale, tandis que le

8

coeur de l'animal bat encore.

2. Procédé suivant la revendication 1, dans lequel l'animal (1) ne manifeste en substance pas de mouvement involontaire des membres immédiatement avant l'introduction de l'enzyme protéolytique.

3. Procédé suivant la revendication 1 ou 2, dans lequel l'animal (1) est saigné dans les 5 minutes de l'introduction de l'enzyme protéolytique.

4. Procédé suivant l'une quelconque des revendications précédentes, dans lequel l'animal (1) est assommé avec un pistolet d'abattage.

5. Procédé suivant l'une quelconque des revendications précédentes, dans lequel l'animal (1) est énervé après avoir été assommé, mais avant que l'enzyme protéolytique est introduite.

6. Procédé suivant l'une quelconque des revendications précédentes, dans lequel l'animal (1) est pesé à un premier poste (2) et ensuite assommé à un deuxième poste, la quantité d'enzyme protéolytique étant déterminée suivant le poids de l'animal.

7. Procédé suivant la revendication 6, dans lequel l'animal (1) est pesé en étant guidé sur une plate-forme de pesage (2) au premier poste.

8. Procédé suivant l'une quelconque des revendications précédentes, dans lequel l'animal (1) est assommé dans une stalle d'assommement (5), puis l'enzyme protéolytique est introduite et l'animal est ensuite égorgé et transporté le long d'une auge de saignée (9) par des moyens de transport aériens (8).

9. Procédé suivant l'une quelconque des revendications précédentes, dans lequel l'enzyme protéolytique est une enzyme réversiblement désactivée.

10. Procédé suivant l'une quelconque des revendications précédentes, dans lequel l'enzyme protéolytique est la papaïne, la bromélaïne ou la ficine.

11. Procédé suivant l'une quelconque des revendications précédentes, dans lequel l'animal (1) est un bovidé.

(a)

(b)

(c)

FIG.1